Europäisches Patentamt

European Patent Office

Office européen des brevets

(11) Publication number: **0 129 282**
**B1**

(12) **EUROPEAN PATENT SPECIFICATION**

(45) Date of publication of patent specification: **07.09.88**

(21) Application number: **84200819.5**

(22) Date of filing: **08.06.84**

(51) Int. Cl.⁴: **G 01 B 7/10**

(54) **Measuring device for the "contactless" measurement of large thicknesses, for metal materials above the Curie temperature.**

(30) Priority: **15.06.83 IT 2163783**

(43) Date of publication of application:
**27.12.84 Bulletin 84/52**

(45) Publication of the grant of the patent:
**07.09.88 Bulletin 88/36**

(84) Designated Contracting States:
**AT BE CH DE FR GB LI LU NL SE**

(56) References cited:
**DE-A-2 226 101**
**FR-A-2 163 899**

**REVIEW OF SCIENTIFIC INSTRUMENTS, vol. 51, no. 4, April 1980, pages 521-527, American Institute of Physics, New York, US; S.R. RYAN et al.: "A magnetic-reluctance thickness gauge for high conductivity, ferromagnetic films"**

**TRANSACTIONS AIEE, vol. 73, May 1954, pages 138-142, New York, US; W.A. YATES et al.: "Sheet and plated -metal measurements with a phase-angle-type probe"**

(73) Proprietor: **CISE- Centro Informazioni Studi Esperienze S.p.A.**
**Via Carducci, 14**
**I-20123 Milano (IT)**

(73) Proprietor: **INNSE INNOCENTI SANTEUSTACCHIO S.p.A.**
**20, Via A. Franchi**
**I-25100 Brescia (IT)**

(73) Proprietor: **DALMINE S.p.A.**
**Stabilimento di Dalmine**
**I-24044 Dalmine Bergamo (IT)**

(72) Inventor: **Caruso, Eugenio**
**Via Catalani 58**
**I-20131 Milano (IT)**
Inventor: **Gray, Antonio**
**Via 1o Maggio 22**
**I-20090 Segrate Milan (IT)**

(74) Representative: **Appoloni, Romano et al**
**ING. BARZANO' & ZANARDO MILANO S.p.A. Via Borgonuovo 10**
**I-20121 Milano (IT)**

Courier Press, Leamington Spa, England.

**0 129 282**

(56) References cited:

JOURNAL OF SCIENTIFIC INSTRUMENTS, series 2, vol. 1, no. 11, November 1968, pages 1136-1137, London, GB; A de SA: "A radio-frequency method for determining Curie point temperatures"

## Description

This invention relates to a measuring device for the contactless measurement of the thickness of metallic material at a temperature above the Curie temperature.

Measuring devices are known for measuring the thickness of plates and tubes leaving hot rolling mills.

Measurement of the kind are currently made by the following methods:

a) gamme-ray or X-ray radiography.

b) Echography using ultrasonic electromagnetic transducers.

These systems have various drawbacks, which can be summarized as follows:

a) dimensions, cost, psychological problems and the need for adequate radiation shielding in the case of gamma-ray systems. Dimensions, cost, low accuracy and the need for adequate shielding in the case of X-ray systems.

b) The complexity of ultrasonic electromagnetic transducer systems, the fact that the measuring sensitivity is highly dependent on the sensor-wall distance, and the need to keep the sensor very close to the wall (in practice not more than 1 mm distant).

There have been proposed devices for the measurement of the thickness of metallic materials (Review of Scientific Instruments, Vol. 51, No. 4 April 1980, pages 521—527) and particularly devices for measuring physical properties of metallic materials having a high temperature (FR—A—2 163 899), which employ coil means inductively coupled with the metallic materials. The value of the physical properties of the materials are deduced from the value of the impedance of the coil means.

With such devices, however, a variation of the distance of the coil means from the metallic material could cause a wrong measurement of the physical properties of the metallic material, particularly when said distance must be relatively high like in the measurement of plates and tubes leaving hot rolling mills.

An object of the present invention is to remedy the aforesaid inconveniences.

According to the invention this object is attained by a measuring device for the contactless measurement of the thickness of metallic material at a temperature above the Curie temperature, comprising a magnetic core with pole pieces facing a surface of the metallic material, coil means wound on a body of said core, generator means for supplying an alternating current to said coil means, means for measuring the impedance of said coil means, characterized by comprising sensor means for determining the distance between said coil means and said surface and processing means for processing the value of said impedance and said distance in order to obtain the value of thickness of the metallic material independently from a variation of said distance.

Large thicknesses can be measured if the metal alloy of the material to be measured is above the Curie temperature. This physical condition means that the material is no longer ferromagnetic (nor contains ferromagnetic phases of precipitates), but instead is a dia or paramagnetic state. The absence of ferromagnetism enables the lines of force of the magnetic field to penetrate into the material. The high temperature means that the metal alloy has a sufficiently high electrical resistivity to limit the dissipation of the magnetic field energy by the eddy current effect, and thus ensure good penetration of the alternating magnetic field.

The characteristics of the present invention will be apparent by reference, by way of example, to the accompanying drawings in which:

Figure 1 shows the basic scheme of a sensor of a measuring device according to the invention;

Figure 2 shows the equivalent magnetic circuit of said sensor in combination with the material subjected to thickness measurement;

Figures 3, 4 and 5 are diagrams of three possible examples of circuit arrangements of said measuring device;

Figure 6 shows the basic scheme of a different type of sensor for a measuring device according to the invention; and

Figure 7 shows a further type of sensor for a measuring device according to the invention.

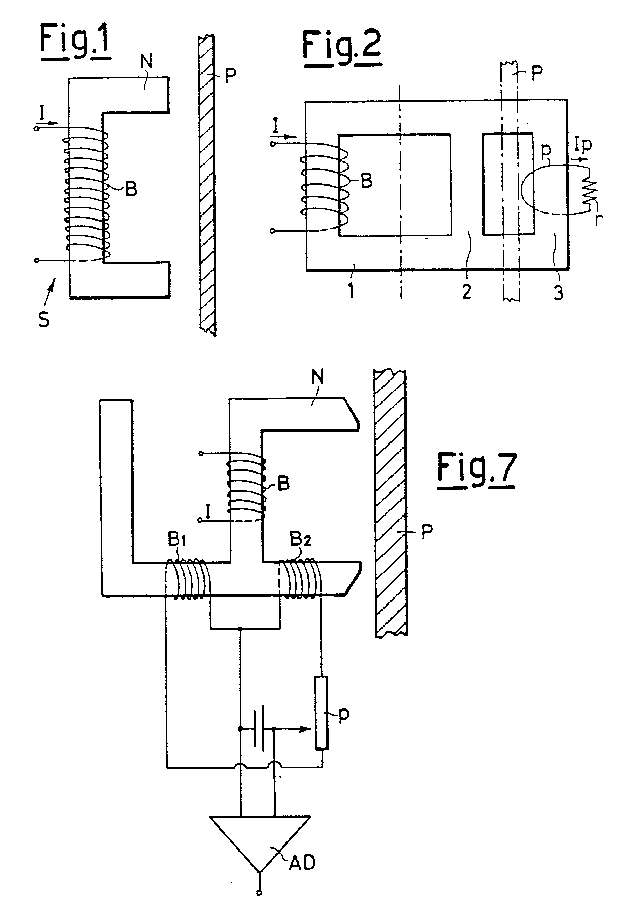

Figure 1 shows a sensor S comprising a ferromagnetic core N (of "C" shape), the pole pieces of which face a conductive wall P to be measured. On the central portion of the ferromagnetic core N there is wound a coil B, which is fed with sinusoidal current I and has a measurable impedance Z.

This described assembly corresponds to the equivalent magnetic circuit of Figure 2, which comprises a branch 1 equivalent to the ferromagnetic core N, a branch 2 equivalent to the passage through air of the magnetic flux between the core N and wall P, and a branch 3 equivalent to the passage in air downstream of the wall P; in the equivalent circuit model, the wall P is assumed thin relative to the air thicknesses and is thus negligible. On the other hand, the material P is at a temperature higher than the Curie temperature, and the magnetic permeability of the air and of the material are approximately equal ($u_r \approx 1$), so that the presence of the wall does not alter the distribution of the magnetic field lines of flux. The three said branches are characterised by different values of magnetic reluctance, ie:

—in the branch 1 there is a reluctance $R_1$, which is negligible compared with the other two because of high permeability of the ferromagnetic material which constitutes the core N;

—in the branch 2 there is a reluctance $R_2$, which is determined by the air upstream of the wall P;

—in the branch 3 there is a reluctance $R_3$, which is determined by the air downstream of the wall P and equivalent to the wall P. The turns of the coil B, which are n in number, are linked with the branch 1, whereas one turn p is to be considered linked with the third branch, to represent the conductive wall P, which has a resistance r proportional to the resistivity of its constituent material.

In a situation of this kind, feeding the coil B with a sinusoidal current I of angular frequency $\omega$ gives rise to a magnetomotive force

$$f.m.m.=n\,I$$

to which there corresponds in the branch 1 a magnetic flux

$$\phi_1=\phi_2+\phi_3$$

where $\phi_2$ and $\phi_3$ represent the contributions provided by the fluxes present in the banches 2 and 3 respectively.

Whereas $\phi_2$ can be calculated by considering only the reluctance $R_2$, ie

$$\phi_2=n\,I/R_2$$

the flux $\phi_3$ also depends on the current Ip induced in the conductive wall P (and thus in the turn p with resistance r), ie

$$\phi_3=(n\,I-I_p)/R_3$$

The current $I_p$ itself depends on the derivative of $\phi_3$ with respect to time, and on the resistance r offered by the wall P. Using vectorial notation:

$$I_p=j\omega\phi_3/r$$

from which, using the previous equation:

$$\phi_3=\frac{n\,I/R_3}{1+j\omega/rR_3}$$

The voltage V applied across the coil B can be calculated thus:

$$V=j\omega\phi_1n=jwn(nI/R_2+\frac{nI/R_3}{1+j\omega/rR_3}$$

It follows that the impedance Z of the coil B is given by the equation:

$$Z=\frac{V}{I}=j\omega L(1-\frac{\alpha\omega^2\tau^2}{1+\omega^2\tau^2}+\frac{\alpha\omega^2\tau}{1+\omega^2\tau^2}.L \qquad (1)$$

in which the following parameters have been introduced:

$$\alpha=\frac{R_2}{R_2+R_3}\;;\;L=n^2\left(\frac{1}{R_2}+\frac{1}{R_3}\right);\;T=\frac{1}{rR_3}$$

where $\alpha$ depends on the ratio of the reluctance of the magnetic paths upstream of the wall P to the reluctance external to the core and thus depends on the distance between the sensor and the wall, L is equal to the inductance of the coil B in the absence of the conductive wall, and T is a constant proportional to the inverse of the resistance presented by said wall, and thus proportional to the wall thickness.

The above relationship (1) makes it possible to obtain the measurement of the thickness of the wall P from the measurement of the impedance Z of the coil B, by introducing the sensor-wall distance parameter as described hereinafter.

For this purpose it is possible to operate in one of the following ways:

A) By obtaining an independent measure of the sensor-wall distance, for example by means of capacitive, optical, microwave or other sensors, the thickness of the wall P can be determined by measuring one of the following constituent parameters of the impedance Z of the coil B:

a) the modulus of the coil impedance

$$Z=\frac{\omega L}{1+\omega^2\tau^2}\sqrt{1+\omega^2\tau^2[1+\omega^2\tau^2(\alpha-1)^2+1]} \qquad (2)$$

b) the real part of the coil impedance

$$Z_r=\frac{\alpha\omega^2\tau}{1+\omega^2\tau^2}.L \qquad (3)$$

c) the coefficient of the imaginary part of the coil impedance

$$Z_i=(1-\frac{\alpha\omega^2\tau^2}{1+\omega^2\tau^2})\omega L \qquad (4)$$

The parameter $K=\omega\tau$ is an index of the magnetic field penetration through the wall P. The smaller the value of K the greater the transparency. In this respect, for penetration to be good, the impedance of the third branch $\omega/R_3$ must be less than the resistance r of the equivalent turn:

$$\frac{\omega}{R_3}<r$$

and thus

$$K=\omega\tau<1$$

The relationship is satisfied the smaller the value of $\tau$. As $\tau=1/rR_3$, it is necessary for r to be large, this condition being satisfied when the material is at high temperature, as will be the case in thickness measurement at the exit of hot rolling mills. By introducing a first order approximation, the real part of the impedance becomes (where $K<<1$)

$$Z_r=\alpha\omega^2\tau L \qquad (5)$$

with a very strong dependence (1/r) on the presence of the wall P. From each of the expressions 2, 3, 4, 5, the values of L and $\omega$ being known and having the values of $R_2$ and $R_3$, it is possible,

from a knowledge of the sensor-wall distance and using theoretical calculations and tables of theoretical or experimental origon, to obtain the value of r and thus obtain the thickness of the wall P, as the average resistivity of this latter is known. This latter passage can also be effected either on the basis of theoretical calculations or, more conveniently, from experimental results.

B) Simultaneous measurements are made of the impedance of the coil B, these measurements providing its real part and imaginary part, as indicated heretofore.

These measurements can be processed by comparing them with experimental tables which provide the corresponding values of thickness and sensor-wall distance.

C) The voltage signal $j\omega LI$, present across the coil B when the conductive wall P is absent, is subtracted from the voltage measured when the wall is present, and the phase difference $\theta$ between the resultant signal and the current fed to the coil is measured.

This phase difference is given by

$$\theta = \arcsin \frac{(\omega L - Z_i)}{\sqrt{(\omega L - Z_i)^2 + Z_r^2}}$$

from which

$$\sqrt{\frac{\omega^2 \tau^2}{1 + \omega^2 \tau^2}} = \sin \theta$$

from which it is possible to deduce the required value of the thickness of the wall P once the sensor-wall distance is known.

D) Several coil impedance measurements are made at different frequencies. In this respect, the magnetic fields at lower frequencies are more sensitive to the thickness, whereas those at higher frequencies are more sensitive to the sensor-wall distance as a consequence of the skin effect, which limits magnetic flux penetration into the conductors at high frequency. The thickness measurement and sensor-wall distance can be obtained by suitable mathematicl manipulation or by using tables.

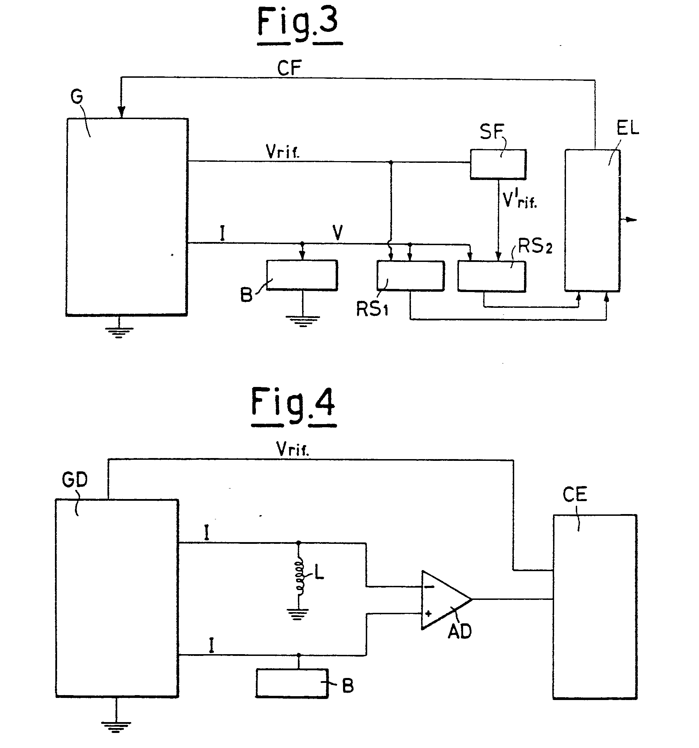

To employ the methods explained in the preceding paragraphs A, B and D, the circuit arrangement illustrated in Figure 3 can be used, which is shown and described here by way of non-limiting example. In said figure, it can be seen that a generator G generating sinusoidal current of angular frequency $\omega$ feeds the current I to the sensor coil B, and a reference voltage $V_{rif}$, which a phase shifter SF shifts through 90° so that it becomes $V'_{rif}$. The voltage V across the coil B, which indicates the impedance of this latter, is rectified by two synchronous detectors $RS_1$ and $RS_2$ which are piloted by the reference voltages $V_{rif}$ and $V'_{rif}$ respectively, and the relative outputs are fed to a processor EL which, in accordance with the proposed methods, is able to determine the value of the thickness of the wall P. If measurements at different frequencies are required, the processor EL can control the frequency of the sinusoidal generator G by means of a frequency control signal CF.

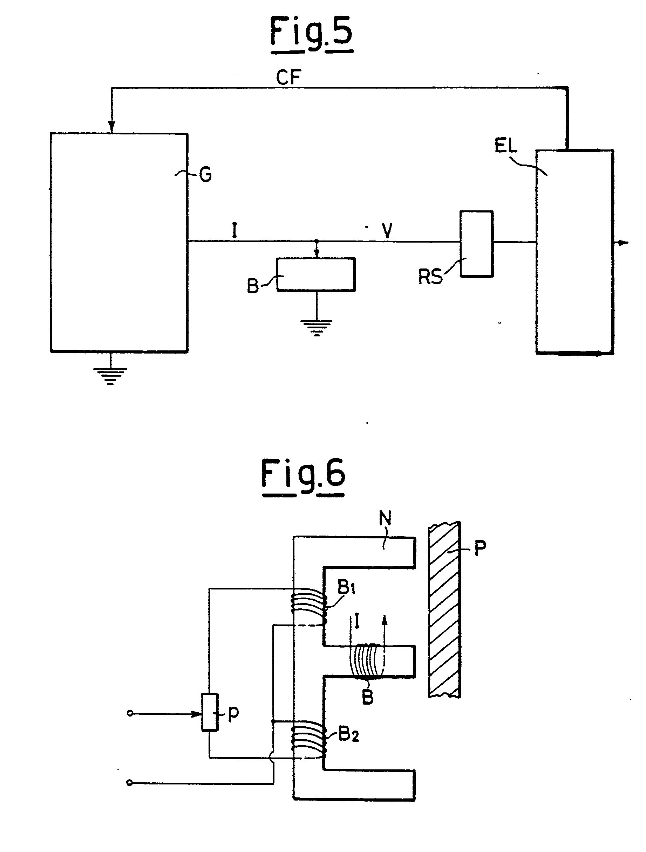

In the case of the method described in the preceding paragraph C it is advisable to use the circuit arrangement of Figure 4, in which a double sinusoidal generator GD feeds two identical currents I to the sensor coil B and to an inductor L having a coefficient equal to that of the coil when the wall is absent. The difference between the two resultant voltage signals, which is obtained by means of a differential amplifier AD, is then compared, with regard to the phase, with a reference signal $V_{rif}$ provided by the generator GD. This phase comparison is made by a phase comparator and processor CE, by means of which the thickness of the wall P can be obtained. When employing method A, and wishing to use only the modulus value of the impedance Z it is possible to use the more simple circuit arrangement shown in Figure 5. A generator G generating sinusoidal current with angular frequency $\omega$ feeds current I to the sensor coil B. The voltage V across the coil B, which is indicative of the impedance of this latter, is rectified by RS and fed to a processor EL able to determine the thickness of the wall P.

Instead of being constituted by a single coil which operates both as an exciter element and as an inductance, the impedance variations of which are measured, the sensor can be constructed differently in order to improve the signal/noise ratio and stability, and to simplify the electrical circuits.

Figure 6 shows the basic scheme of said sensor. An exciter coil B and two measurement coils $B_1$ and $B_2$ connected into a Wheatstone bridge are wound on a core having an "E" shape. A potentiometer p enables the bridge to be zeroed when the input to be measured is absent.

Figure 7 shows a different coil assembly scheme which has been tested experimentally and gives optimum performance. The core has a shape of "⌐", the exciter coil B being mounted on the vertical central branch and the two bridge coils $B_1$ and $B_2$ being mounted on the adjacent horizontal branches of the "⌐".

The measuring devices in question are able to make measurements in short time periods of down to 1 ms.

The core can have also a "I" shape or an "E rotation" shape. At least two coils in the form of an autotransformer can be provided, for exciting and measurement purposes. Particularly two measurement coils are obtained from an exciter coil by means of an autotransformer tap.

Generically, the sensor can comprise more than one coil. The measurement coil can be the inductive portion of an oscillating circuit whose self frequency variation is measured to calculate the sensor-wall distance. Having the wall distance value, it is possible to determine the thickness of the metallic material. The generator can comprise means for varying the frequency of the alternating current as a function of the thickness of the wall.

Means can be provided for protecting the components of the measuring device from the high temperature, particularly the sensor should be cooled and shielded from flames and fumes which may accompany the material to be measured.

Although the description has referred heretofore to the measurement of a flat conductive wall, generally every kind of metallic material of any form can be tested, for example a ferrous plate, a ferrous rod, or a ferrous tube, fixed or movable with respect to the sensor, e.g. leaving hot rolling mills.

Using analogous methods it is possible to measure the transverse profile of the planarity of the metallic material, for example of the ferrous plate, or a diameter if the metallic material has a circular form, like the ferrous rod.

It is also possible to measure the eccentricity of the ferrous tube, by opposing sensors, with respect to the tube, fed by the same generator, and using means for measuring the variations in the impedance differences between the coils of the opposing sensor.

**Claims**

1. A measuring device for the contactless measurement of the thickness of metallic material at a temperature above the Curie temperature, comprising a magnetic core (N) with pole pieces facing a surface of the metallic material, coil means (B, $B_1$, $B_2$) wound on a body of said core (N), generator means (G, GD) for supplying an alternating current to said coil means (B), means for measuring the impedance of said coil means (B, $B_1$, $B_2$), characterized by comprising sensor means for determining the distance between said coil means (B, $B_1$, $B_2$) and said surface and processing means for processing the value of said impedance and said distance in order to obtain the value of thickness of the metallic material independently from a variation of said distance.

2. Measuring device according to claim 1, wherein said coil means comprise said distance sensor means.

3. Measuring device according to claim 2, wherein said distance sensor means comprises means for generating at least one different higher frequency than that used for the means for measuring the impedance of said coil means.

4. Measuring device according to claim 1, wherein said core (N) is made of ferromagnetic material.

5. Measuring device according to claim 1, wherein said core (N) has a "C" shape (Fig. 1).

6. Measuring device according to claim 1, wherein said core (N) has an "E" shape (Fig. 6).

7. Measuring device according to claim 1, wherein said core (N) has a "⌐" shape (Fig. 7).

8. Measuring device according to claim 1, wherein said core (N) has a "1" shape.

9. Measuring device according to claim 1, wherein said core (N) has an "E rotation" shape.

10. Measuring device according to claim 1, wherein said coil means are constituted by a single exciter and measurement coil (B).

11. Measuring device according to claim 1, wherein said coil means comprise more than one coil.

12. Measuring device according to claim 11, wherein said coil means are constituted by an exciter coil (B) and two secondary measurement coils ($B_1$, $B_2$) forming two branches of a Wheatstone bridge.

13. Measuring device according to claim 11, wherein said coil means comprises at least two coils in the form of an autotransformer.

14. Measuring device according to claim 13, wherein two measurement coils are obtained from an exciter coil by means of an autotransformer tap.

15. Measuring device according to claim 7, wherein an exciter coil (B) is wound on a vertical central branch and two bridge coils ($B_1$, $B_2$) are wound on adjacent horizontal branches of the "⌐" shaped core (N).

16. Measuring device according to claim 1, wherein said coil means comprises an inductive portion of an oscillating circuit whose self frequency variation is measured to deduce the thickness of the metallic material.

17. Measuring device according to claim 1, wherein said generator means comprise a sinusoidal generator (G) for providing the sinusoidal feed current for the coil means (B) and for providing a reference voltage, and said impedance measurement means comprise two synchronous detectors ($RS_1$, $RS_2$) for rectifying the voltage developed across the coil means (B) in accordance respectively with said reference voltage and with a voltage the phase of which is shifted through 90° relative to said reference voltage, and means for feeding the outputs of said detectors to said processing means (EL).

18. Measuring device according to claim 1, wherein said generator means comprise a double sinusoidal generator (GD) for providing the sinusoidal feed current for the coil means (B) and for providing an identical feed current for an inductor (L) having a coefficient equal to that of the coil means (B) when the metallic material is absent, and said impedance measurement means comprise a differential amplifier (AD) for obtaining the difference between the two resultant voltages and a phase comparator (CE) for making a phase comparison between said difference and a reference voltage provided by said generator (GD).

19. Measuring device according to claim 1, wherein said generator means comprise a sinusoidal generator (G) for providing a sinusoidal feed current for the coil means (B), and said impedance measurement means comprise a detector (RS) for rectifying the voltage developed across the coil means (B), the output of said detector (RS) being fed to said processing means (EL).

20. Measuring device according to anyone of the claims 1, 17, 18, 19, wherein said generator means (G, GD) comprises means for varying the frequency of the alternating current as a function of the thickness of the metallic material.

21. Measuring device according to claim 1, wherein said impedance measuring means comprises means for calculating the modulus of the impedance of the coil means (B, $B_1$, $B_2$).

22. Measuring device according to claim 1, wherein said measuring means comprise means for calculating the real part of the impedance of the coil means (B, $B_1$, $B_2$).

23. Measuring device according to claim 1, wherein said measuring means comprise means for calculating the imaginary part of the impedance of the coil means (B, $B_1$, $B_2$).

24. Measuring device according to claim 1, wherein said processing means comprise means for calculating two of the three parameters, modulus, real part, imaginary part, of the impedance of the coil means.

25. Measuring device according to claim 1, wherein means are provided for protecting the components of the measuring device from the high temperature.

26. Use of a measuring device according to anyone of the preceding claims for measuring the thickness of a tube.

27. Use of a measuring device according to anyone of the preceding claims for measuring the thickness of a ferrous plate.

28. Use of a measuring device according to anyone of the preceding claims for determining the eccentricity of a tube through the measuring of the impedance of coil means disposed in opposite position with respect to the tube.

29. Use of a measuring device according to anyone of the preceding claims for determining the transverse profile of a ferrous plate.

30. Use of a measuring device according to anyone of the preceding claims for determining the planarity of a ferrous plate.

31. Use of a measuring device according to anyone of the preceding claims for determining the diameter of a ferrous rod.

**Patentansprüche**

1. Messvorrichtung zur kontaktlosen Messung der Dicke eines metallischen Stoffes bei einer höheren Temperatur als die Curie-Temperatur, mit einem Magnetkern (N), dessen Polstücke einer Oberfläche des metallischen Stoffes gegenüberliegen, mit um einen Teil des Kerns (N) gewickelten Wickelmitteln (B, $B_1$, $B_2$), mit Generatormitteln (G, GD) zur Speisung der Wickelmittel (B) mit einem Wechelstrom, mit Mitteln zur Messung der Impedanz der Wickelmittel (B, $B_1$, $B_2$), dadurch gekennzeichnet, dass Fühler zur Ermittlung des Abstandes zwischen den Wickelmitteln (B, $B_1$, $B_2$) und der betreffenden Oberflächen sowie Mittel zur Verarbeider Werte der Impedanz und des Abstandes vorgesehen sind, um den Wert der Dicke des metallischen Stoffes unabhängig von einer Veränderung des Abstandes zu erhalten.

2. Messvorrichtung nach Anspruch 1, wobei die Wickelmittel die Fühler umfassen.

3. Messvorrichtung nach Anspruch 2, wobei die Abstandsfühler Mittel zur Erzeugung wenigstens einer unterschiedlichen Frequenz umfassen, die höher als die für die Mittel zur Messung der Impedanz der Wickelmittel benutzte Frequenz ist.

4. Messvorrichtung nach Anspruch 1, wobei der Kern (N) aus ferromagnetischem Material besteht.

5. Messvorrichtung nach Anspruch 1, wobei der Kern (N) eine "C"-Form hat (Fig. 1).

6. Messvorrichtung nach Anspruch 1, wobei der Kern (N) eine "E"-Form hat (Fig. 6).

7. Messvorrichtung nach Anspruch 1, wobei der Kern (N) eine "⌴⌓"-Form hat (Fig. 7).

8. Messvorrichtung nach Anspruch 1, wobei der Kern (N) eine "I"-Form hat.

9. Messvorrichtung nach Anspruch 1, wobei der Kern (N) eine "E-Drehungs"-Form hat.

10. Messvorrichtung nach Anspruch 1, wobei die Wickelmittel aus einer einzelnen Erregungs- und Messwicklung (B) bestehen.

11. Messvorrichtung nach Anspruch 1, wobei die Wickelmittel mehr als eine Wicklung umfassen.

12. Messvorrichtung nach Anspruch 11, wobei die Wickelmittel aus einer Erregungswicklung (B) und zwei sekundären Messwicklungen ($B_1$, $B_2$) bestehen, die zwei Arme einer Wheatstonebrücke bilden.

13. Messvorrichtung nach Anspruch 11, wobei die Wickelmittel wenigstens zwei Wicklungen in Form eines Spartrafos umfassen.

14. Messvorrichtung nach Anspruch 13, wobei über eine Spartrafo-Abzweigung aus einer Erregungswicklung Messwicklungen erhalten werden.

15. Messvorrichtung nach Anspruch 7, wobei eine Erregungswicklung (B) um einen senkrechten, mittleren Arm und zwei Brückenwicklungen ($B_1$, $B_2$) um benachbarte, waagerechte Armes des "⌴⌓"-förmigen Kerns (N) gewickelt sind.

16. Messvorrichtung nach Anspruch 1, wobei die Wicklungsmittel einen induktiven Abschnitt eines Schwingkreises umfassen, dessen Selbstfrequenzveränderung gemessen wird, um die Dicke des metallischen Stoffes zu ermitteln.

17. Messvorrichtung nach Anspruch 1, wobei die Generatormittel einen Sinusgenerator (G) umfassen, der die Wickelmittel (B) mit sinusförmigen Strom speist und eine Referenzspannung liefert, die Impedanzmessmittel zwei Synchrondetektoren ($RS_1$, $RS_2$) zur Gleichrichtung der durch die Wickelmittel (B) entwickelten Spannung in Ubereinstimmung mit der Referenzspannung und mit einer Spannung umfassen, deren Phase gegenüber der Referenzspannung um 90° verschoben ist, und Mittel vorgesehen sind, die die Ausgaben der Detektoren den Verarbeitungsmitteln (EL) zuführen.

18. Messvorrichtung nach Anspruch 1, wobei die Generatormittel einen doppelten Sinusgenerator (GD) zur Speisung der Wickelmittel (B) mit sinusförmigen Strom und zur Speisung eins Induktors (L) mit genau demselben Strom umfassen und dieser Induktor einen demjenigen der Wickelmittel (B) entsprechenden Koeffizienten hat, wenn der metallische Stoff abwesend ist, und die Impedanzmessmittel einen Differentialverstärker (AD), um den Unterschied zwischen den beiden sich ergebenden Spannungen zu ermitteln, und einen Phasenvergliecher (CE) umfassen, um zwischen diesem Unterschied und der durch den Generator (GD) gelieferten Referenzspannung einen Phasenvergleich anzustellen.

19. Messvorrichtung nach Anspruch 1, wobei die Generatormittel einen Sinusgenerator (G) umfassen, um die Wickelmittel (B) mit einem sinusförmigen Strom zu speisen, und die Impedanzmessmittel einen Detektor (RS) zum Gleichrichten der durch die Wickelmittel entwickelten Spannung umfassen, wobei die Ausgabe des Detektors (RS) den Verarbeitungsmitteln (EL) zugeführt wird.

20. Messvorrichtung nach irgendeinem der Ansprüche 1, 17, 18, 19, wobei die Generatormittel (G, GD) Mittel zur Veränderung der Frequenz des Wechselstromes in Abhängigkeit von der Dicke des metallischen Stoffes umfassen.

21. Messvorrichtung nach Anspruch 1, wobei die Impedanzmessmittel Mittel zur Berechnung des Impedanzmoduls der Wickelmittel (B, $B_1$, $B_2$) umfassen.

22. Messvorrichtung nach Anspruch 1, wobei die Messmittel Mittel zur Berechnung des wirklichen Impedanzanteils der Wickelmittel (B, $B_1$, $B_2$) umfassen.

23. Messvorrichtung nach Anspruch 1, wobei die Messmittel Mittel zur Berechnung des imaginären Impedanzanteils der Wickelmittel (B, $B_1$, $B_2$) umfassen.

24. Messvorrichtung nach Anspruch 1, wobei die Verarbeitungsmittel Mittel zur Berechnung von zwei der drei Parameter—Modul, wirklicher Anteil, imaginärer Anteil—der Impedanz der Wickelmittel umfassen.

25. Messvorrichtung nach Anspruch 1, wobei Mittel vorgesehen sind, um die Bestandteile der Messvorrichtung vor der hohen Temperatur zu schützen.

26. Anwendung einer Messvorrichtung nach irgendeinem der vorhergehenden Ansprüche zur Messung der Dicke eines Rohres.

27. Anwendung einer Messvorrichtung nach irgendeinem der vorhergehenden Ansprüche zur Messung der Dicke einer Eisenplatte.

28. Anwendung einer Messvorrichtung nach irgendeinem der vorhergehenden Ansprüche zur Ermittlung der Mittigkeitsabweichung eines Rohres durch Messung der Impedanz von gegenüber dem Rohr in geeigneter Lage angeordneten Wickelmittel.

29. Anwendung einer Messvorrichtung nach irgendeinem der vorhergehenden Ansprüche zur Ermittlung des Querprofils einer Eisenplatte.

30. Anwendung einer Messvorrichtung nach irgendeinem der vorhergehenden Ansprüche zur Ermittlung der Ebenheit einer Eisenplatte.

31. Anwendung einer Messvorrichtung nach irgendeinem der vorhergehenden Ansprüche zur Ermittlung des Durchmessers einer eisernen Stange.

**Revendications**

1. Appareil de mesure pour la mesure sans contact de l'épaisseur d'une matière métallique à une température supérieure à la température de Curie, comprenant un noyau magnétique (N) à pièces polaires en regard d'une surface de la matière métallique, des éléments d'enroulement (B, $B_1$, $B_2$) bobinés sur un corps dudit noyau (N), un générateur (G, GD) pour fournir un courant alternatif auxdits éléments d'enroulement (B), des moyens de mesure de l'impédance desdits éléments d'enroulement (B, $B_1$, $B_2$), caractérisé en ce qu'il comprend des moyens de détection pour déterminer la distance entre lesdits éléments d'enroulement (B, $B_1$, $B_2$) et ladite surface, et des moyens de traitement pour traiter la valeur de ladite impédance et de ladite distance afin d'obtenir la valeur de l'épaisseur de la matière métallique indépendamment d'une variation de ladite distance.

2. Appareil de mesure suivant la revendication 1, dans lequel lesdits éléments d'enroulement comprennent lesdits moyens de détection de distance.

3. Appareil de mesure suivant la revendication 2, dans lequel lesdits moyens de détection de distance comprennent des moyens pour générer au moins une fréquence différente plus élevée que celle qui est utilisée pour les moyens de mesure de l'impédance desdits éléments d'enroulement.

4. Appareil de mesure suivant la revendication 1, dans lequel ledit noyau (N) est fabriqué en une matière ferromagnétique.

5. Appareil de mesure suivant la revendication 1, dans lequel ledit noyau (N) est en forme de "C" (figure 1).

6. Appareil de mesure suivant la revendication 1, dans lequel ledit noyau (N) est en forme de "E" (figure 6).

7. Appareil de mesure suivant la revendication 1, dans lequel ledit noyau (N) est en forme de "⌐" (figure 7).

8. Appareil de mesure suivant la revendication 1, dans lequel ledit noyau (N) est en forme de "I".

9. Appareil de mesure suivant la revendication 1, dans lequel ledit noyau (N) est en forme de "E en rotation".

10. Appareil de mesure suivant la revendication 1, dans lequel lesdits éléments d'enroulement sont constitués par un enroulement unique (B) d'excitation et de mesure.

11. Appareil de mesure suivant la revendication 1, dans lequel lesdits élément d'enroulement comprennent plus d'un enroulement.

12. Appareil de mesure suivant la revendication 11, dans lequel lesdits éléments d'enroulement sont constitués par un enroulement d'excitation (B) et deux enroulements secondaires de mesure

($B_1$, $B_2$) formant deux branches d'un pont de Wheatstone.

13. Appareil de mesure suivant la revendication 11, dans lequel lesdits éléments d'enroulement comprennent au moins deux enroulements sous la forme d'un auto-transformateur.

14. Appareil de mesure suivant la revendication 13, dans lequel deux enroulements de mesure sont obtenus à partir d'un enroulements d'excitation, au moyen d'une prise d'auto-transformateur.

15. Appareil de mesure suivant la revendication 7, dans lequel un enroulement d'excitation (B) est bobiné sur une branche central verticale et deux enroulements de pont ($B_1$, $B_2$) sont bobinés sur des branches horizontales adjacentes du noyau (N) en forme de "⊔⊏".

16. Appareil de mesure suivant la revendication 1, dans lequel lesdits éléments d'enroulement comprennent une partie inductive d'un circuit oscillant dont on mesure la variation d'auto-fréquence pour en déduire l'épaisseur de la matière métallique.

17. Appareil de mesure suivant la revendication 1, dans lequel ledit générateur comprend un générateur sinusoïdal (G) pour fournir le courant d'alimentation sinusoïdal des éléments d'enroulement (B) est pour fournir une tension de référence, et lesdits moyens de mesure d'impédance comprennent deux détecteurs synchrones ($RS_1$, $RS_2$), pour redresser la tension engendrée à travers les éléments d'enroulements (B) conformément respectivement à ladite tension de référence et à une tension dont la phase est décalée de 90° par rapport à ladite tension de référence, et des moyens d'envoi des sorties desdits détecteurs aux dits moyens de traitement (EL).

18. Appareil de mesure suivant la revendication 1, dans lequel ledit générateur comprend un générateur sinusoïdal double (GD) pour fournir le courant sinusoïdal d'alimentation des éléments d'enroulement (B) et pour fournir un courant identique d'alimentation d'une inductance (L) ayant un coefficient égal à celui des éléments d'enroulement (B) lorsque la matière métallique est absente, et lesdits moyens de mesure d'impédance comprennent un amplificateur différentiel (AD), pour obtenir la différence entre les deux tensions résultantes, et un comparateur de phase (CE) pour effectuer une comparaison de phase entre ladite différence et une tension de référence fournie par ledit générateur (GD).

19. Appareil de mesure suivant la revendication 1, dans lequel ledit générateur comprend un générateur sinusoïdal (G) pour fournir un courant sinusoïdal d'alimentation des éléments d'enroulement (B), et lesdits moyens de mesure d'impédance comprennent un détecteur (RS) pour redresser la tension engendrée à travers les éléments d'enroulement (B), la sortie dudit détecteur (RS) étant envoyée auxdits moyens de traitement (EL).

20. Appareil de mesure suivant l'une quelconque des revendications 1, 17, 18, 19, dans lequel ledit générateur (G, GD) comprend des moyens de variation de la fréquence du courant alternatif en fonction de l'épaisseur de la matière métallique.

21. Appareil de mesure suivant la revendication 1, dans lequel lesdits moyens de mesure d'impédance comprennent des moyens pour calculer le module de l'impédance des éléments d'enroulement (B, $B_1$, $B_2$).

22. Dispositif de mesure suivant la revendication 1, dans lequel lesdits moyens de mesure comprennent des moyens pour calculer la partie réelle de l'impédance des éléments d'enroulement (B, $B_1$, $B_2$).

23. Appareil de mesure suivant la revendication 1, dans lequel lesdits moyens de mesure comprennent des moyens pour calculer la partie imaginaire de l'impédance des éléments d'enroulement (B, $B_1$, $B_2$).

24. Appareil de mesure suivant la revendication 1, dans lequel lesdits moyens de traitement comprennent des moyens de calcul de deux des trois paramètres, module, partie réelle, partie imaginaire, de l'impédance des éléments d'enroulement.

25. Appareil de mesure suivant la revendication 1, dans lequel des moyens sont prévus pour protéger les composants de l'appareil de mesure contre la température élevée.

26. Application d'un appareil de mesure suivant l'une quelconque des revendication précédentes, à la mesure de l'épaisseur d'un tube.

27. Application d'un appareil de mesure suivant l'une quelconque des revendications précédentes, à la mesure de l'épaisseur d'une plaque en métal ferreux.

28. Application d'un appareil de mesure suivant l'une quelconque des revendications précédentes, à la détermination de l'excentricité d'un tube par l'intermédiaire de la mesure de l'impédance d'éléments d'enroulement disposés en opposition par rapport au tube.

29. Application d'un appareil de mesure suivant l'une quelconque des revendications précédentes, à la détermination du profil transversal d'une plaque en métal ferreux.

30. Application d'un appareil de mesure suivant l'une quelconque des revendications précédentes, à la détermination de la planéité d'une plaque en métal ferreux.

31. Application d'un appareil de mesure suivant l'une quelconque des revendications précédentes, à la détermination du diamètre d'une tige en métal ferreux.

Fig.1

Fig.2

Fig.7

## Fig.3

## Fig.4

## Fig.5

## Fig.6